(19) Europäisches Patentamt / European Patent Office / Office européen des brevets

(11) **EP 2 490 042 B1**

(12) **FASCICULE DE BREVET EUROPEEN**

(45) Date de publication et mention
de la délivrance du brevet:
**14.06.2017 Bulletin 2017/24**

(51) Int Cl.:
*G01S 19/53* (2010.01)          *G01S 19/52* (2010.01)
*G01P 5/16* (2006.01)           *G01P 21/02* (2006.01)
*G01P 1/16* (2006.01)

(21) Numéro de dépôt: **12155134.5**

(22) Date de dépôt: **13.02.2012**

(54) **Procédé et système de détermination des paramètres de navigation d'un aéronef**

Verfahren und System zur Bestimmung der Navigationsparameter eines Luftfahrzeugs

Method and system for determining navigation parameters of an aircraft

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.02.2011 FR 1100488**

(43) Date de publication de la demande:
**22.08.2012 Bulletin 2012/34**

(73) Titulaire: **Thales
92200 Neuilly Sur Seine (FR)**

(72) Inventeurs:
• **REVOL, Marc
26120 UPIC (FR)**
• **MANDLE, Jacques
07130 SAINT PERAY (FR)**
• **BIBAUT, Alain
91430 IGNY (FR)**
• **COATANTIEC, Jacques
26210 FAUCONNIERES (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
**EP-A1- 1 837 675     DE-A1-102004 034 894
US-A- 5 787 384     US-A1- 2003 149 512**

**Description**

La présente invention a pour objet un procédé et un système de détermination des paramètres de navigation, notamment la route et l'attitude, d'un aéronef. Le domaine de l'invention est celui de la navigation aérienne et concerne tout type d'aéronef, avec ou sans pilote.

L'invention se rapporte en particulier au domaine de la radio-navigation par satellite.

L'invention se rapporte également au domaine de la sécurisation et du contrôle de l'intégrité des systèmes anémométriques délivrant des mesures anémobaroclinométriques, dites mesures primaires, permettant de positionner l'aéronef par rapport à la masse d'air.

Les senseurs qui positionnent un aéronef par rapport à la masse d'air, appelés senseurs anémobaroclinométriques, délivrent des mesures fondamentales pour l'aéronef et sa sécurité. Classiquement, ces mesures concernent quatre grandeurs physiques : la pression totale, la pression statique, la température (totale ou statique) et l'incidence. A partir de telles mesures primaires, des paramètres de navigation élaborés sont construits comme par exemple, la vitesse conventionnelle de l'aéronef par rapport à l'air, l'altitude pression, l'incidence ou encore le nombre de Mach. En l'absence de ces paramètres, l'avion ne peut pas voler en sécurité. L'ensemble de ces paramètres est traité par une unité centrale, de type anémo-barométrique, généralement redondée qui constitue la voie opérationnelle ou primaire permettant de traiter l'ensemble des informations nécessaires à la navigation de l'aéronef.

Compte tenu du caractère fondamentale des mesures anémo-barométriques pour la sécurité d'un aéronef, il est important de concevoir une voie de secours ou secondaire, permettant de pallier une éventuelle défaillance de la voie opérationnelle et/ou permettant d'assurer un contrôle de l'intégrité des mesures qu'elle réalise.

Les centrales anémo-barométriques, qui comportent notamment des sondes de Pitot couplées à des sondes de pression statique, présentent l'avantage de pouvoir fournir directement une mesure du module de la vitesse conventionnelle de l'aéronef par rapport à l'air. Cette information est critique pour le pilotage de l'aéronef. En effet, si cette vitesse est trop élevée, l'aéronef peut être endommagé, si elle est trop faible, il peut décrocher et tomber. En associant cette mesure, à une estimation du cap (réalisée par exemple par un magnétomètre), il est possible de déterminer le vecteur vitesse de l'aéronef par rapport à l'air. La vitesse réelle de déplacement résulte ensuite de la composition de la vitesse de l'aéronef par rapport à l'air avec la vitesse du vent moyen.

Pour assurer une sécurisation des informations délivrées par une centrale anémo-barométrique, il est connu de mettre en oeuvre un système de secours qui doit fournir une seconde estimation de la vitesse conventionnelle de l'aéronef par rapport à l'air. Les systèmes de secours usuels, mettent en oeuvre à cet effet des méthodes identiques à celles utilisées par la voie opérationnelle, c'est-à-dire basées sur l'utilisation de sondes Pitot et de sondes de pression statique.

Ainsi, les mesures réalisées par la voie de secours ne sont pas indépendantes de celles délivrées par la voie opérationnelle puisqu'elles sont exposées à des modes de défaillance communs.

Pour résoudre ce problème, il convient donc de mettre en oeuvre un système de secours qui utilise des moyens de mesure différents de ceux de la voie opérationnelle afin d'assurer un contrôle d'intégrité indépendant et de diminuer la probabilité de défaillance simultanée des deux voies.

Une solution au problème précité consiste à utiliser des signaux de radio-navigation par satellites, encore appelés signaux GNSS « Global Navigation Satellite System », pour la mesure de route et d'attitude de l'aéronef.

Le brevet français n° 01 16561 du demandeur portant sur un « procédé d'amélioration de la détermination de l'attitude d'un véhicule à l'aide de signaux de radionavigation par satellite » décrit l'utilisation de signaux de radio-navigation par satellites pour la mesure d'attitude et de cap porteur mais restreint à la mise en oeuvre d'au moins deux antennes distantes de plusieurs longueurs d'onde.

Cette solution présente l'inconvénient de nécessiter au moins deux antennes GNSS et d'augmenter l'encombrement sur l'aéronef. De plus elle comporte des difficultés de synchronisation des deux antennes auxquelles s'ajoutent encore des problèmes de résolution d'ambigüité sur l'écart de phase de porteuse mesurée à partir des deux antennes distantes.

Une limitation générale à l'utilisation des signaux de radio-navigation par satellite pour la navigation aérienne réside dans la vulnérabilité des récepteurs GNSS vis-à-vis de la disponibilité des signaux ou des perturbations diverses liées à l'environnement de propagation, telles les interférences, multi-trajets ou problèmes de brouillage. Ces perturbations sont susceptibles d'entrainer des biais de mesures importants, des sauts de phase voire des décrochages des boucles de poursuite de phase rendant ainsi momentanément indisponible le service.

Bien que cette vulnérabilité des systèmes GNSS a ralenti jusqu'à présent leur utilisation en tant qu'instrument de navigation principal pour un aéronef, ils sont tout à fait compatibles des exigences de performances d'un système de navigation de secours présentant une disponibilité et une précision suffisante pour contrôler l'intégrité des mesures fournies par le système principal.

EP1837675 divulgue un procédé de détermination de l'attitude d'un véhicule à l'aide de signaux de radionavigation par satellite basé sur le calcul de l'angle formé par le vecteur vitesse et l'orientation de l'antenne. Dans ce contexte, l'invention a pour objectif de proposer une solution de navigation aérienne de secours basée sur l'utilisation de signaux de radio-navigation. Un avantage de l'invention est qu'elle ne nécessite l'utilisation que d'une seule antenne contrairement aux solutions de l'art antérieur.

L'invention a ainsi pour objet un procédé de détermination de paramètres de navigation d'un aéronef caractérisé en ce qu'il consiste au moins à déterminer la vitesse géographique $\vec{V}$ dudit aéronef, exprimée dans un repère fixe local donné $\{\vec{i},\vec{j},\vec{k}\}$, obtenue à partir des mesures $m_i$ d'incréments $\Delta\varphi_i$ de phase de porteuse des signaux de radio-navigation provenant d'une pluralité de satellites de radio-navigation en vue dudit aéronef et reçus par une seule antenne, chacune desdites mesures $m_i$ constituant une estimée de la vitesse relative dudit aéronef par rapport audit satellite projetée sur l'axe à vue reliant l'aéronef au satellite, chacune desdites mesures $m_i$ étant compensées de la vitesse radiale apparente du satellite.

Dans un mode particulier de l'invention, la vitesse géographique $\vec{V}$ est obtenue par application de la méthode des moindres carrés à la résolution de l'équation matricielle $\mathbf{m} = \mathbf{H}\vec{V} + b$, où m est un vecteur dont les composantes sont lesdites mesures $m_i$ d'incréments de phase de porteuse de chacun des signaux de radio-navigation reçus, b est un vecteur dont les composantes sont les erreurs de mesures, par exemple dues au bruit thermique, impactant lesdites mesures $m_i$, H est la matrice de changement du repère des axes à vue satellite vers ledit repère local $\{\vec{i},\vec{j},\vec{k}\}$.

Dans un mode particulier, le procédé selon l'invention consiste en outre à déterminer l'accélération $\vec{\gamma}$ dudit aéronef dans ledit repère local $\{\vec{i},\vec{j},\vec{k}\}$, à partir d'une mesure $\vec{\gamma_i}$ de la dérivation sur une période de temps donnée, desdits incréments de phase $\Delta\varphi_i$, chacune desdites mesures de dérivations $\vec{\gamma_i}$ constituant une estimée de l'accélération relative dudit aéronef par rapport audit satellite projetée sur l'axe à vue entre l'aéronef et le satellite à laquelle est ajoutée l'accélération apparente $\vec{\gamma}_i^a$ du satellite dans la direction dudit axe à vue pour obtenir l'accélération totale $\vec{\gamma}_i^p$ de l'aéronef dans l'axe à vue satellite.

Dans un mode particulier de l'invention, l'accélération $\vec{\gamma}$ dudit aéronef dans ledit repère local est obtenue par application de la méthode des moindres carrés à la résolution de l'équation matricielle $\vec{\gamma}^p = \mathbf{H}\vec{\gamma} + b'$, où $\vec{\gamma}^p$ est un vecteur dont les composantes sont les mesures $\vec{\gamma}_i^p$ d'accélération totale de l'aéronef sur chaque axe à vue satellite, b' est un vecteur dont les composantes sont les erreurs de mesures impactant lesdites mesures d'intégration $\vec{\gamma_i}$, H est la matrice de changement du repère des axes à vue satellite vers ledit repère local $\{\vec{i},\vec{j},\vec{k}\}$.

Dans un mode particulier, le procédé selon l'invention consiste en outre à déterminer l'angle de roulis $\Phi$ de l'aéronef à partir de la vitesse géographique $\vec{V}$ de l'aéronef exprimée dans le repère géographique {nord, est, centre} et de la force spécifique $\vec{f}$ appliquée audit aéronef, ladite force $\vec{f}$ étant déduite de l'accélération $\vec{\gamma}$ en lui soustrayant le champ de gravitation de la Terre, l'angle de roulis $\Phi$ étant calculé à l'aide de la relation suivante :

$$\Phi = a\tan\left(\frac{v_n \cdot f_{H_e}(\vec{v}) - v_e \cdot f_{H_n}(\vec{v})}{-f_{H_c}(\vec{v})}\right)$$ où $v_n$ et $v_e$ sont les composantes normées de la direction de la vitesse géographique

$\vec{V}$ sur les axes est et nord du repère local {nord, est, centre} et $\vec{f}_H(\vec{v}) = \vec{f} - (\vec{f}.\vec{v})\vec{v}$ est la projection, sur le plan orthogonal au déplacement de l'aéronef, de la force spécifique $\vec{f}$.

Dans un mode particulier, le procédé selon l'invention consiste en outre à déterminer l'angle de tangage $\theta$ à partir de la vitesse géographique $\vec{V}$ de l'aéronef exprimée dans le repère géographique {nord, est, centre}, par exemple par le calcul suivant: $\theta = \arcsin(-v_c)$, où $v_c$ est la projection de la vitesse géographique $\vec{V}$ normée sur l'axe centre dudit repère.

Dans un mode particulier, le procédé selon l'invention consiste en outre à déterminer la vitesse $\vec{V}_{air}$ dudit aéronef par rapport à l'air en soustrayant à la vitesse géographique $\vec{V}$ dudit aéronef une estimée de la vitesse du vent $\vec{V}_{vent}$.

Dans un mode particulier, le procédé selon l'invention consiste en outre à déterminer l'angle de cap $\psi$ à partir de la vitesse $\vec{V}_{air}$ de l'aéronef par rapport à l'air exprimée dans le repère géographique {nord, est, centre}, par exemple par le calcul suivant: $\Psi = \arctan\left(\frac{v_{air_e}}{v_{air_n}}\right)$ avec $v_{air_e}, v_{air_n}$ les projections respectives de la vitesse air normée sur les axes est et nord du repère local {nord, est, centre}.

Dans un mode particulier, le procédé selon l'invention consiste en outre à réaliser un contrôle de l'intégrité de l'information de vitesse délivrée par un ou plusieurs systèmes anémométriques que comporte l'aéronef par comparaison avec la vitesse $\vec{V}_{air}$ de l'aéronef par rapport à l'air.

Dans une variante de réalisation, le procédé selon l'invention consiste en outre à réaliser un contrôle de l'intégrité de l'information de vitesse anémométrique délivrée par un ou plusieurs systèmes anémométriques que comporte l'aéronef en comparant la variation de ladite vitesse anémométrique avec la variation de la vitesse géographique $\vec{V}$.

Dans une variante de réalisation, le procédé selon l'invention consiste au préalable à vérifier l'intégrité des signaux de radio-navigation reçus par application d'une méthode de contrôle autonome de l'intégrité des mesures.

L'invention a également pour objet un système de détermination de paramètres de navigation d'un aéronef, embarqué dans ledit aéronef, comportant au moins un récepteur de radio-navigation mono-antenne et des moyens de calcul adaptés à mettre en oeuvre le procédé selon l'invention.

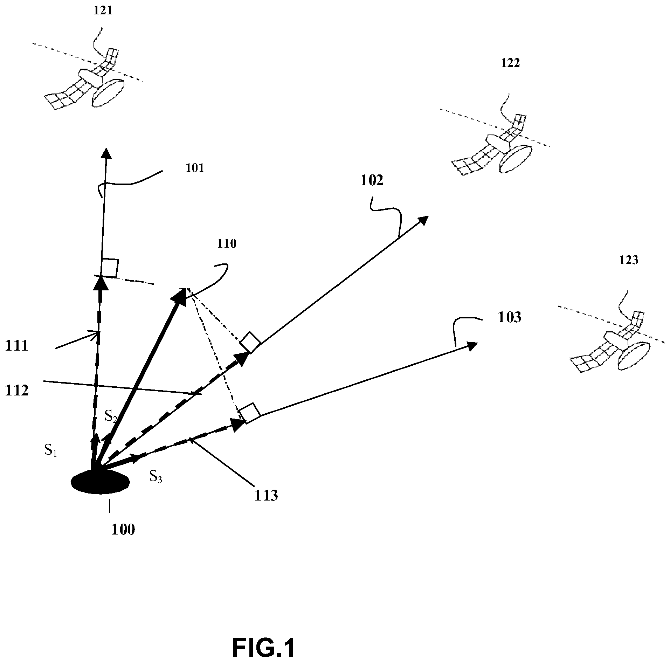

D'autres caractéristiques et avantages de l'invention apparaîtront à l'aide de la description qui suit faite en regard de l'unique dessin annexé qui représente à la figure 1 une illustration de la méthode selon l'invention permettant de déterminer la vitesse du porteur à partir d'une seule antenne élémentaire GNSS recevant des signaux de radio-navigation en provenance d'une pluralité de satellites.

*Contrôle de l'intégrité des systèmes anémométriques*

Un des objectifs visé par la présente invention est de proposer un contrôle de l'intégrité du ou des systèmes anémométriques embarqués sur l'aéronef et/ou de compléter l'instrumentation de secours.

A cet effet, l'invention permet de déterminer la vitesse géographique réelle $\vec{V}$ de l'aéronef dans un repère terrestre local. Le procédé selon l'invention permettant d'obtenir une estimée de cette vitesse à partir d'une seule antenne GNSS est développé dans la suite de la description. A partir de la connaissance de la vitesse géographique $\vec{V}$, il est possible de réaliser, par comparaison, un contrôle des mesures de vitesse fournies par le ou les systèmes anémométriques. La comparaison de la mesure de vitesse de l'aéronef par rapport à l'air (encore appelée vitesse air), fournie par le système anémométrique avec celle de la vitesse géographique, fournie par l'invention, implique de disposer d'une estimation de la vitesse du vent. Après correction de la vitesse géographique par la vitesse du vent à l'altitude courante, le résultat est comparé à la vitesse air fournie par le ou les systèmes anémométriques afin d'en contrôler l'intégrité et de détecter une éventuelle incohérence résultant d'une défaillance d'un ou plusieurs systèmes.

Dans une variante de réalisation, le contrôle d'intégrité peut être effectué de façon différentielle en comparant les variations de la vitesse air avec celles de la vitesse géographique, obtenues après filtrage et compensation des pressions statiques. L'avantage de cette variante est qu'elle ne nécessite pas la connaissance de la vitesse du vent, celle-ci étant supposée constante pendant la durée de mesure.

La comparaison des mesures de vitesses, ou de variations de vitesses, conduit soit à confirmer l'intégrité de la mesure de vitesse air lorsque l'écart entre les mesures est inférieur à un seuil donné soit à alerter sur une défaillance d'un ou plusieurs systèmes anémométriques lorsque cet écart est supérieur au même seuil.

Dans le cas où tous les systèmes anémométriques disponibles sont décrétés défaillants, le système de secours selon l'invention est mis en oeuvre pour entretenir la trajectoire de l'aéronef par rapport à l'air et entretenir son attitude.

*Détermination de la route de l'aéronef*

On décrit à présent le procédé, selon l'invention, permettant de déterminer, à partir d'un unique récepteur GNSS comportant une antenne élémentaire, la route de l'aéronef, c'est-à-dire sa vitesse et son cap, dans le repère géographique local. Par la suite le terme porteur désigne l'aéronef sur lequel est embarqué le récepteur GNSS ainsi que les moyens de mise en oeuvre de l'invention.

La route du porteur dans le repère géographique local peut être estimée à partir d'une pluralité de signaux de radio-navigation et en particulier à partir de l'évolution de la phase de l'onde porteuse observée dans l'axe à vue de chacun des satellites. L'évolution de la phase est significative de la variation de fréquence due à l'effet Doppler, elle-même reliée à l'évolution de la distance entre le satellite et le porteur, donc à la vitesse du porteur dans un repère lié au satellite. La variation de fréquence Doppler apparente du satellite étant relativement lente et suivant une évolution connue, il est possible de reconstituer la variation de fréquence Doppler propre à la cinématique du porteur vis-à-vis de chaque axe à vue reliant le porteur à un satellite. De plus les mesures d'incréments de phase porteuse, homogènes à la fréquence Doppler, peuvent être consolidées par le biais d'algorithmes de contrôle autonome de l'intégrité de ces mesures, par exemple en utilisant la méthode connue sous l'acronyme anglo saxon RAIM (Receiver Autonomous Integrity Monitoring). De tels algorithmes permettent de détecter et corriger d'éventuels défauts impactant le signal de radio-navigation et indirectement les mesures de phase réalisées à partir de ce dernier et qui servent de base au procédé, selon l'invention, de détermination des paramètres de navigation.

La figure 1 schématise le vecteur vitesse géographique 110 du porteur 100 et ses projections 111,112,113 dans la direction de chaque axe à vue satellite 101,102,103. Les vecteurs directeurs unitaires de chaque axe à vue satellite sont notés $s_1, s_2, s_3$ et de façon générale $s_i$ où $i$ est l'indice associé à un axe à vue reliant un récepteur de radio-navigation embarqué sur le porteur 100 et un satellite 121,122,123 en visibilité de ce récepteur. La figure 1 représente, par souci de clarté, un exemple pour lequel trois satellites sont exploités, mais l'invention s'applique de façon similaire pour un nombre quelconque de satellites.

Soit $\{\vec{i},\vec{j},\vec{k}\}$ un repère géométrique local fixe par rapport à la Terre. Le vecteur directeur unitaire $s_i$ s'écrit, dans ce repère, à l'aide de la relation suivante :

$$\vec{s}_i = \cos(El^i)\cos(Az^i)\,\vec{i} + \cos(El^i)\sin(Az^i)\,\vec{j} + \sin(El^i)\,\vec{k} \quad (1)$$

L'angle $El^i$ est l'angle d'élévation de l'axe à vue d'indice i. L'angle $Az^i$ est l'angle d'azimut de l'axe à vue d'indice i. Ces angles sont déterminés à partir de la connaissance de la position et du mouvement des satellites de radio-navigation en visibilité du porteur 100. Ces informations sont élaborées grâce aux almanachs et éphémérides transmis périodiquement par les satellites aux récepteurs.

Le récepteur GNSS embarqué sur le porteur 100 délivre, à partir du signal transmis par chaque satellite d'indice i, une mesure $m_i = \Delta\varphi_i$ de l'incrément de phase de l'onde porteuse. Cette mesure est fournie par la lecture entre deux instants de l'évolution de la phase de la boucle de phase porteuse mise en oeuvre par le récepteur de radio-navigation. Cette phase est homogène à un écart de temps de propagation, donc à un déplacement dans l'axe du satellite. Ces mesures contiennent donc intrinsèquement l'information de vitesse du porteur par rapport au satellite, projetée sur l'axe à vue satellite. A partir de ces mesures de vitesse radiale et de la connaissance au travers des éphémérides de la vitesse radiale du satellite, qui est quasiment constante entre deux instants consécutifs, il est possible de déterminer les composantes $\omega_X, \omega_Y$ et $\omega_Z$ de la vitesse 110 du porteur dans le repère géographique local $\{\vec{i},\vec{j},\vec{k}\}$ en résolvant les équations suivantes. Les mesures $m_i$ sont au préalable compensées de la vitesse radiale du satellite.

$$\begin{bmatrix} m_1 \\ m_2 \\ \vdots \\ m_n \end{bmatrix} = \begin{bmatrix} \vec{i}\circ\vec{s_1} & \vec{j}\circ\vec{s_1} & \vec{k}\circ\vec{s_1} \\ \vec{i}\circ\vec{s_2} & \vec{j}\circ\vec{s_2} & \vec{k}\circ\vec{s_2} \\ \vdots & \vdots & \vdots \\ \vec{i}\circ\vec{s_n} & \vec{j}\circ\vec{s_n} & \vec{k}\circ\vec{s_n} \end{bmatrix} \begin{bmatrix} \omega_X \\ \omega_Y \\ \omega_Z \end{bmatrix} + \begin{bmatrix} b_1 \\ b_2 \\ \vdots \\ b_n \end{bmatrix} \quad (2a)$$

ou encore

$$\mathbf{m} = \mathbf{H}\omega + b \quad (2b)$$

n est le nombre de satellites en visibilité du récepteur GNSS, H est la matrice de changement de repère permettant de passer du repère des axes à vue $\{\vec{s_1},\vec{s_2},...,\vec{s_n}\}$ vers le repère local $\{\vec{i},\vec{j},\vec{k}\}$, et $b_i$ représente le bruit thermique supposé Gaussien centré d'écart type $\sigma_i$ qui impacte les mesures effectuées sur les signaux de radio-navigation. Le symbole ° entre vecteurs de la matrice H représente l'opération de projection.

L'équation (2a) peut être résolue par la méthode des moindres carrés. Le vecteur d'état de la vitesse porteur est alors estimé à l'aide de la relation suivante :

$$\hat{\omega} = (\mathbf{H^T H})^{-1}\mathbf{H^T m} \quad (3)$$

Le vecteur des erreurs d'estimation est obtenu à l'aide de la relation suivante :

$$\tilde{\omega} = \omega - \hat{\omega} = -(\mathbf{H^T H})^{-1}\mathbf{H^T} b \quad (4)$$

La matrice de covariance des erreurs est alors donnée par la relation (5), en supposant une distribution normale du bruit résiduel.

$$\begin{aligned} \mathrm{Var}(\tilde{\omega}) &= E[(\omega - \hat{\omega})(\omega - \hat{\omega})^T] \\ &= (\mathbf{H^T H})^{-1}\mathbf{H^T R H}(\mathbf{H^T H})^{-1} \end{aligned} \quad (5)$$

où $\mathbf{R} = E(bb^T)$ est la matrice de covariance du bruit seul.

En supposant que l'écart type du bruit de mesure des incréments de phase pour chaque axe à vue est identique et égal à $\sigma_b$, alors la matrice d'erreur de l'estimée devient:

$$\mathrm{Var}(\tilde{\omega}) = \sigma_b^2 (\mathbf{H^T H})^{-1} \quad (6a)$$

où encore, sous forme normalisée:

$$\Sigma = \frac{\mathrm{Var}(\tilde{\omega})}{\sigma_b^2} = (\mathbf{H^T H})^{-1} \quad (6b)$$

La racine carrée de la trace de cette variance donne une indication permettant d'estimer la précision obtenue sur le vecteur vitesse géographique $\vec{V} = \begin{bmatrix} \omega_X \\ \omega_Y \\ \omega_Z \end{bmatrix}$.

La vitesse air de l'aéronef est alors estimée en soustrayant la vitesse du vent à la vitesse géographique : $\vec{V}_{air} = \vec{V} - \vec{V}_{vent}$ La vitesse du vent utilisée est celle de la dernière estimation sécurisée fournie par le système primaire ou est déterminée par l'instrument de secours.

A partir du vecteur $\vec{v} = \dfrac{\vec{V}}{|\vec{V}|}$ direction de la vitesse géographique et de sa projection $v_c$ sur l'axe centre du repère local {nord, est, centre}, on en déduit une estimée de l'angle de tangage $\theta = \arcsin(-v_c)$.

A partir de la vitesse air $\vec{V}_{air}$, on déduit la vitesse air normalisée $\vec{v}_{air} = \dfrac{\vec{V}_{air}}{|\vec{V}_{air}|}$ et enfin l'angle de cap $\Psi = \arctan(\dfrac{v_{air_e}}{v_{air_n}})$ avec $v_{air_e}, v_{air_n}$ les projections respectives de la vitesse air normalisée sur les axes est et nord du repère local {nord, est, centre}.

*Détermination de l'attitude de l'aéronef*

Dans le cas où tous les systèmes anémométriques de la voie primaire sont inexploitables, car soumis à des causes de défaillance communes, l'invention permet également de déterminer et d'entretenir l'attitude du porteur à partir des mesures délivrées par un récepteur de radio-navigation mono-antenne.

Comme décrit précédemment, les angles de cap et de tangage peuvent être dérivés à partir de la vitesse géographique de l'aéronef. Pour compléter les angles d'attitude, il convient de déterminer également l'angle de roulis.

A cet effet, le procédé selon l'invention utilise les mesures d'accélérations de la phase de la porteuse des signaux de radio-navigation transmis par chacun des satellites en vue du récepteur. Le terme accélération de la phase désigne une grandeur homogène à la dérivée de l'incrément de la phase. Cette mesure est reliée à l'accélération relative entre le satellite et le porteur par les équations détaillées ci après.

Les mesures d'accélérations de la phase sont obtenues par dérivation des mesures d'incrément de phase, qui sont homogènes à une information de vitesse, fournies par la boucle de poursuite de phase du récepteur de radio navigation pour chaque axe à vue satellite et sur une période de temps $\Delta t$ donnée, par exemple une période de 100 ms.

L'aéronef est en mouvement dans le champ de gravitation $\vec{g}$ de la Terre et est soumis à un ensemble de forces, y compris la gravitation, qui lui procurent une accélération absolue $\vec{\gamma} = \begin{bmatrix} \gamma_X \\ \gamma_Y \\ \gamma_Z \end{bmatrix}$ dans le repère géographique local. La force spécifique, encore appelée accélération statique, est définie par le vecteur $\vec{f}$ relié à l'accélération absolue du porteur et au champ de gravitation par la relation suivante :

$$\vec{f} = \vec{\gamma} - \vec{g} \quad (7)$$

Le champ de gravitation $\vec{g}$ peut être déterminé à partir de valeurs précalculées pour un ensemble de positions du porteur prédéfinies en effectuant une interpolation de ces valeurs pour en déduire le champ de gravitation à la position courante du porteur. Il peut également être déterminé à l'aide d'un système inertiel embarqué sur le porteur.

La détermination de l'accélération absolue $\vec{\gamma}$, à partir de l'accélération de la phase pour chaque axe à vue satellite permet ainsi de reconstituer le vecteur des forces spécifiques vues par le porteur et indirectement son attitude.

L'accélération de la phase, pour chaque axe à vue satellite d'indice i, est déterminée par dérivation de la mesure d'incrément de phase $\Delta\varphi$ sur une période de temps donnée $\Delta t$. Elle peut ainsi être calculée en utilisant, par exemple la relation suivante :

$$\vec{\gamma}_i = \frac{c}{f_0} \frac{(\Delta\varphi_k - \Delta\varphi_{k-1})}{\Delta t^2 / 2} \vec{u}_i \quad (8)$$

$f_0$ est la fréquence porteuse du signal de radio-navigation reçu par le récepteur,

c est la vitesse de la lumière,

$\Delta t$ est la période d'intégration qui correspond par exemple à la période de prélèvement de la phase intégrée et filtrée par la boucle de poursuite de phase du récepteur de radio-navigation,

$\Delta\varphi_k$ et $\Delta\varphi_{k-1}$ sont les incréments de phase estimés à deux instants successifs,

$\vec{u}_i$ est le vecteur unitaire de l'axe à vue vers le satellite d'indice i.

A partir de la mesure de l'accélération de phase, dans l'axe à vue satellite d'indice i, on détermine l'accélération du porteur, dans l'axe à vue satellite d'indice i, en ajoutant l'accélération apparente du satellite dans la direction de l'axe à vue portée par le vecteur $\vec{u}_i$. L'accélération du porteur dans l'axe à vue d'indice i est ainsi donnée par la relation suivante :

$$\vec{\gamma}_i^p = \vec{\gamma}_i + \vec{\gamma}_i^a = \vec{\gamma}_i + (\vec{\gamma}_i^s . \vec{u}_i)\vec{u}_i \quad (9)$$

$\vec{\gamma}_i^s$ est l'accélération du satellite déterminée à partir de la connaissance des éphémérides et almanachs transmis par ledit satellite au récepteur de radio-navigation pour l'informer en permanence de l'évolution de sa position.

Dans une variante de réalisation de l'invention, les mesures d'accélérations de phase peuvent être précorrigées des variations dues à l'effet Doppler inhérent aux retards induits sur le signal de radio-navigation lors de sa traversée des couches ionosphériques de l'atmosphère.

A partir de l'estimation des accélérations du porteur dans chacun des axes à vue satellite, l'accélération absolue du porteur dans le repère géographique local $\{\vec{i},\vec{j},\vec{k}\}$ est déterminée en utilisant la méthode des moindres carrés détaillées ci-dessus pour son application à la détermination de la vitesse absolue du porteur à partir des mesures d'incréments de phase. L'équation à résoudre dans ce cas est la suivante :

$$\begin{bmatrix} \gamma_1^p \\ \gamma_2^p \\ \vdots \\ \gamma_n^p \end{bmatrix} = \begin{bmatrix} \vec{i}\circ\vec{s_1} & \vec{j}\circ\vec{s_1} & \vec{k}\circ\vec{s_1} \\ \vec{i}\circ\vec{s_2} & \vec{j}\circ\vec{s_2} & \vec{k}\circ\vec{s_2} \\ \vdots & \vdots & \vdots \\ \vec{i}\circ\vec{s_n} & \vec{j}\circ\vec{s_n} & \vec{k}\circ\vec{s_n} \end{bmatrix} \begin{bmatrix} \gamma_X \\ \gamma_Y \\ \gamma_Z \end{bmatrix} + \begin{bmatrix} b'_1 \\ b'_2 \\ \vdots \\ b'_n \end{bmatrix} \quad (10)$$

$b'_i$ représente le bruit thermique supposé Gaussien centré, d'écart type $\sigma'_i$

Une fois l'accélération absolue du porteur dans le repère géographique local déterminée, il est possible d'en déduire la force spécifique appliquée au porteur à l'aide de la relation (7).

La force spécifique $\vec{f}$ est ensuite projetée sur le plan orthogonal au déplacement de l'aéronef afin d'obtenir la force $\vec{f}_H(\vec{v})$ de la façon suivante :.

$$\vec{f}_H(\vec{v}) = \vec{f} - (\vec{f}.\vec{v})\vec{v} \quad (11)$$

Enfin l'angle de roulis est déterminé à l'aide de la relation (12).

$$\Phi = a\tan\left(\frac{v_n . f_{H_e}(\vec{v}) - v_e . f_{H_n}(\vec{v})}{-f_{H_c}(\vec{v})}\right) \quad (12)$$

$v_n$ et $v_e$ sont les composantes normées de la direction de la vitesse absolue $\vec{v}$ sur les axes est et nord du repère local {nord, est, centre}.

L'invention est mise en oeuvre par des moyens de calcul embarqués à bord de l'aéronef et couplés à un récepteur de radio-navigation mono-antenne, par exemple un récepteur GPS ou un récepteur Galileo.

**Revendications**

1.  Procédé de détermination de paramètres de navigation d'un aéronef (100), ledit procédé comprenant au moins la détermination de la vitesse géographique $\vec{V}$ (110) dudit aéronef (100), exprimée dans un repère fixe local donné $\{\vec{i},\vec{j},\vec{k}\}$, ledit procédé comprenant les étapes de :

    - déterminer des mesures $m_i$ d'incréments $\Delta\varphi_i$ de phase de porteuse des signaux de radio-navigation provenant d'une pluralité de satellites de radio-navigation en vue dudit aéronef (100) et reçus par un récepteur de radio-navigation à une seule antenne, chacune desdites mesures $m_i$ constituant une estimée (111) de la vitesse relative dudit aéronef (100) par rapport audit satellite (121) projetée sur l'axe à vue (101) reliant l'aéronef (100) au satellite (121), les mesures $m_i$ étant déterminées par la lecture entre deux instants de l'évolution de la phase de la boucle de phase porteuse du récepteur de radio-navigation,
    - compenser chacune desdites mesures $m_i$ de la vitesse radiale apparente du satellite (121),
    - déterminer les composantes $\omega = [\omega_X, \omega_Y$ et $\omega_Z]$ de la vitesse géographique de l'aéronef en résolvant le système d'équations $\mathbf{m} = \mathbf{H}\omega + b$, où m est le vecteur desdites mesures $m_i$, H est la matrice de changement du repère des axes à vue vers le repère local $\{\vec{i},\vec{j},\vec{k}\}$ et b est le bruit thermique supposé Gaussien centré qui impacte les mesures $m_i$.

2.  Procédé selon la revendication 1 **caractérisé en ce que** la vitesse géographique $\vec{V}$ est obtenue par application de la méthode des moindres carrés à la résolution de l'équation matricielle $\mathbf{m} = \mathbf{H}\vec{V} + b$, où m est un vecteur dont les composantes sont lesdites mesures $m_i$ d'incréments de phase de porteuse de chacun des signaux de radio-navigation reçus, b est un vecteur dont les composantes sont les erreurs de mesures, par exemple dues au bruit thermique, impactant lesdites mesures $m_i$, H est la matrice de changement du repère des axes (101,102,103) à vue satellite vers ledit repère local $\{\vec{i},\vec{j},\vec{k}\}$.

3.  Procédé selon l'une des revendications précédentes **caractérisé en ce qu'**il consiste en outre à déterminer l'accélération $\vec{\gamma}$ dudit aéronef (100) dans ledit repère local $\{\vec{i},\vec{j},\vec{k}\}$, à partir d'une mesure $\vec{\gamma_i}$ de la dérivée sur une période de temps donnée, desdits incréments de phase $\Delta\varphi_i$, chacune desdites mesures de dérivée $\vec{\gamma_i}$ constituant une estimée de l'accélération relative dudit aéronef (100) par rapport audit satellite (121,122,123) projetée sur l'axe à vue (101,102,103) entre l'aéronef et le satellite à laquelle est ajoutée l'accélération apparente $\vec{\gamma}_i^a$ du satellite dans la direction dudit axe à vue pour obtenir l'accélération totale $\vec{\gamma}_i^p$ de l'aéronef (100) dans l'axe à vue satellite (101,102,103).

4.  Procédé selon la revendication 3 **caractérisé en ce que** l'accélération $\vec{\gamma}$ dudit aéronef dans ledit repère local est obtenue par application de la méthode des moindres carrés à la résolution de l'équation matricielle $\vec{\gamma}^p = \mathbf{H}\vec{\gamma} + b'$, où $\vec{\gamma^p}$ est un vecteur dont les composantes sont les mesures $\vec{\gamma}_i^p$ d'accélération totale de l'aéronef sur chaque axe à vue satellite, b' est un vecteur dont les composantes sont les erreurs de mesures impactant lesdites mesures d'intégration $\vec{\gamma_i}$, H est la matrice de changement du repère des axes (101,102,103) à vue satellite vers ledit repère local $\{\vec{i},\vec{j},\vec{k}\}$.

5.  Procédé selon l'une des revendications 3 ou 4 **caractérisé en ce qu'**il consiste en outre à déterminer l'angle de

roulis $\Phi$ de l'aéronef à partir de la vitesse géographique $\vec{V}$ de l'aéronef exprimée dans le repère géographique {nord, est, centre} et de la force spécifique $\vec{f}$ appliquée audit aéronef, ladite force $\vec{f}$ étant déduite de l'accélération $\vec{\gamma}$ en lui soustrayant le champ de gravitation de la Terre, l'angle de roulis $\Phi$ étant calculé à l'aide de la relation suivante :

$$\Phi = a\tan\left(\frac{v_n . f_{H_e}(\vec{v}) - v_e . f_{H_n}(\vec{v})}{-f_{H_c}(\vec{v})}\right)$$ où $v_n$ et $v_e$ sont les composantes normées de la direction de la vitesse géographique $\vec{V}$ sur les axes est et nord du repère local {nord, est, centre} et $\vec{f}_H(\vec{v}) = \vec{f} - (\vec{f}.\vec{v})\vec{v}$ est la projection, sur le plan orthogonal au déplacement de l'aéronef, de la force spécifique $\vec{f}$.

6. Procédé selon l'une des revendications précédentes **caractérisé en ce qu'**il consiste en outre à déterminer l'angle de tangage $\theta$ à partir de la vitesse géographique $\vec{V}$ de l'aéronef exprimée dans le repère géographique {nord, est, centre}, par exemple par le calcul suivant : $\theta = \arcsin(-v_c)$, où $v_c$ est la projection de la vitesse géographique $\vec{V}$ normée sur l'axe centre dudit repère.

7. Procédé selon l'une des revendications précédentes **caractérisé en ce qu'**il consiste en outre à déterminer la vitesse $\vec{V}_{air}$ dudit aéronef (100) par rapport à l'air en soustrayant à la vitesse géographique $\vec{V}$ (110) dudit aéronef (100) une estimée de la vitesse du vent $\vec{V}_{vent}$.

8. Procédé selon la revendication 7 **caractérisé en ce qu'**il consiste en outre à déterminer l'angle de cap $\psi$ à partir de la vitesse $\vec{V}_{air}$ de l'aéronef par rapport à l'air exprimée dans le repère géographique {nord, est, centre}, par exemple par le calcul suivant : $\Psi = \arctan\left(\frac{v_{air_e}}{v_{air_n}}\right)$ avec $v_{air_e}, v_{air_n}$ les projections respectives de la vitesse air normée sur les axes est et nord du repère local {nord, est, centre}.

9. Procédé selon l'une des revendications 7 ou 8 **caractérisé en ce qu'**il consiste en outre à réaliser un contrôle de l'intégrité de l'information de vitesse délivrée par un ou plusieurs systèmes anémométriques que comporte l'aéronef par comparaison avec la vitesse $\vec{V}_{air}$ de l'aéronef par rapport à l'air.

10. Procédé selon l'une des revendications 1 à 8 **caractérisé en ce qu'**il consiste en outre à réaliser un contrôle de l'intégrité de l'information de vitesse anémométrique délivrée par un ou plusieurs systèmes anémométriques que comporte l'aéronef en comparant la variation de ladite vitesse anémométrique avec la variation de la vitesse géographique $\vec{V}$.

11. Procédé selon l'une des revendications précédentes **caractérisé en ce qu'**il consiste au préalable à vérifier l'intégrité des signaux de radio-navigation reçus par application d'une méthode de contrôle autonome de l'intégrité des mesures.

12. Système de détermination de paramètres de navigation d'un aéronef, embarqué dans ledit aéronef, comportant au moins un récepteur de radio-navigation mono-antenne et des moyens de calcul adaptés à mettre en oeuvre le procédé selon l'une des revendications 1 à 11.

**Patentansprüche**

1. Verfahren zum Bestimmen von Navigationsparametern eines Luftfahrzeugs (100), wobei das Verfahren wenigstens das Bestimmen der geografischen Geschwindigkeit $\vec{v}$ (110) des Luftfahrzeugs (100) beinhaltet, ausgedrückt in einem festen lokalen gegebenen Bezugssystem $\{\vec{i}\,\vec{j}\,\vec{k}\}$, wobei das Verfahren die folgenden Schritte beinhaltet:

- Bestimmen von Messwerten $m_i$ von Trägerphaseninkrementen $\Delta\varphi_i$ von Funknavigationssignalen, die von mehreren Funknavigationssatelliten im Sichtfeld des Luftfahrzeugs (100) kommen und von einem Funknavigationsempfänger mit einer einzigen Antenne empfangen werden, wobei jeder der Messwerte $m_i$ eine Schätzung (111) der relativen Geschwindigkeit des Luftfahrzeugs (100) mit Bezug auf den Satelliten (121) bildet, projiziert auf die Sichtachse (101), die das Luftfahrzeug (100) mit dem Satelliten (121) verbindet, wobei die Messwerte $m_i$ durch Lesen zwischen zwei Zeitpunkten der Entwicklung der Phase der Trägerphasenschleife des Funknavigationsempfänger bestimmt werden,

- Kompensieren jedes der Messwerte $m_i$ der radialen scheinbaren Geschwindigkeit des Satelliten (121),
- Bestimmen der Komponenten $\omega = [\omega_x, \omega_y$ und $\omega_z]$ der geografischen Geschwindigkeit des Luftfahrzeugs durch Auflösen des Gleichungssystems $m = H\omega + b$, wobei m der Vektor der Messwerte $m_1$ ist, H die Änderungsmatrix des Bezugssystems der Sichtachsen zum lokalen Bezugssystem $\{\vec{i},\vec{j},\vec{k}\}$ ist und b das als zentriertes Gaußsches Rauschen angenommene thermische Rauschen ist, das die Messwerte $m_i$ beeinflusst.

2. Verfahren nach Anspruch 1, **dadurch gekennzeichnet, dass** die geografische Geschwindigkeit $\vec{v}$ durch Anwenden des Kleinste-Quadrate-Verfahrens auf die Auflösung der Matrixgleichung $m = H\vec{v} + b$ erhalten wird, wobei m ein Vektor ist, dessen Komponenten die Trägerphaseninkrement-Messwerte $m_i$ von jedem der empfangenen Funknavigationssignale sind, b ein Vektor ist, dessen Komponenten die Messfehler sind, zum Beispiel aufgrund von thermischem Rauschen, die die Messwerte $m_i$ beeinflussen, H die Änderungsmatrix des Bezugssystems der Achsen (101, 102, 103) im Sichtfeld des Satelliten in Richtung des lokalen Bezugssystems $\{\vec{i},\vec{j},\vec{k}\}$ sind.

3. Verfahren nach einem der vorherigen Ansprüche, **dadurch gekennzeichnet, dass** es ferner darin besteht, die Beschleunigung $\vec{\gamma}$ des Luftfahrzeugs (100) in dem lokalen Bezugssystem $\{\vec{i},\vec{j},\vec{k}\}$ auf der Basis eines Messwertes $\vec{\gamma_i}$ der Ableitung über eine gegebene Zeitperiode der Phaseninkremente $\Delta\varphi_i$ zu bestimmen, wobei jeder der Ableitungsmesswerte $\vec{\gamma_i}$ eine Schätzung der relativen Beschleunigung des Luftfahrzeugs (100) mit Bezug auf den Satelliten (121, 122, 123) bildet, projiziert auf die Sichtachse (101, 102, 103) zwischen dem Luftfahrzeug und dem Satelliten, zu der die scheinbare Beschleunigung $\vec{y}_i^a$ des Satelliten in der Richtung der Sichtachse addiert wird, um die Gesamtbeschleunigung $\vec{y}_i^p$ des Luftfahrzeugs (100) in der Satellitensichtachse (101, 102, 103) zu erhalten.

4. Verfahren nach Anspruch 3, **dadurch gekennzeichnet, dass** die Beschleunigung $\vec{\gamma}$ des Luftfahrzeugs in dem lokalen Bezugssystem durch Anwenden des Kleinste-Quadrate-Verfahrens auf die Auflösung der Matrixgleichung $\vec{\gamma}^p = H\vec{\gamma} + b'$ erhalten wird, wobei $\vec{\gamma}^p$ ein Vektor ist, dessen Komponenten die Gesamtbeschleunigungsmesswerte $\vec{\gamma}^p$ des Luftfahrzeugs auf jeder Satellitensichtachse sind, b' ein Vektor ist, dessen Komponenten die Messfehler sind, die die Integrationsmesswerte $\vec{\gamma_i}$ beeinflussen, H die Änderungsmatrix des Bezugssystems der Satellitensichtachsen (101, 102, 103) in Richtung auf den lokalen Bezugssystem $\{\vec{i},\vec{j},\vec{k}\}$ ist. Richtung auf den lokalen Bezugssystem ist.

5. Verfahren nach Anspruch 3 oder 4, **dadurch gekennzeichnet, dass** es ferner darin besteht, den Rollwinkel $\Phi$ des Luftfahrzeugs auf der Basis der geografischen Geschwindigkeit $\vec{v}$ des Luftfahrzeugs, ausgedrückt im geografischen Bezugssystem {Nord, Ost, Mitte}, und die auf das Luftfahrzeug angewandte spezifische Kraft $\vec{f}$ zu bestimmen, wobei die Kraft $\vec{f}$ von der Beschleunigung $\vec{\gamma}$ abgeleitet wird, indem das Gravitationsfeld der Erde davon subtrahiert wird, wobei der Rollwinkel $\Phi$ mit Hilfe der folgenden Relation berechnet wird: $\Phi = a\tan(\dfrac{v_n.f_{H_e}(\vec{v}) - v_e.f_{H_n}(\vec{v})}{-f_{H_c}(\vec{v})})$,

wobei $v_n$ und $v_e$ die normierten Komponenten der Richtung der geografischen Geschwindigkeit $\vec{v}$ auf der Ost- und Nordachse des lokalen Bezugssystems {Nord, Ost, Mitte} sind und $\vec{f}_H(\vec{v}) = \vec{f} - (\vec{f}.\vec{v})\vec{v}$ die Projektion, in der Ebene orthogonal zur Bewegung des Luftfahrzeugs, der spezifischen Kraft $\vec{f}$ ist.

6. Verfahren nach einem der vorherigen Ansprüche, **dadurch gekennzeichnet, dass** es ferner darin besteht, den Neigungswinkel $\theta$ auf der Basis der geografischen Geschwindigkeit $\vec{v}$ des Luftfahrzeugs zu bestimmen, ausgedrückt im geografischen Bezugssystem {Nord, Ost, Mitte}, beispielsweise mit der folgenden Berechnung: $\theta = \arcsin(-v_c)$, wobei $v_c$ die Projektion der normierten geografischen Geschwindigkeit $\vec{v}$ auf der mittleren Achse des Bezugssystems ist.

7. Verfahren nach einem der vorherigen Ansprüche, **dadurch gekennzeichnet, dass** es ferner darin besteht, die Geschwindigkeit $\vec{v}_{air}$ des Luftfahrzeugs (100) mit Bezug auf die Luft zu bestimmen, durch Subtrahieren einer Schätzung der Geschwindigkeit des Windes $\vec{v}_{vent}$ von der geografischen Geschwindigkeit $\vec{v}$ (110) des Luftfahrzeugs (100).

8. Verfahren nach Anspruch 7, **dadurch gekennzeichnet, dass** es ferner darin besteht, den Kurswinkel $\Psi$ auf der

Basis der Geschwindigkeit $\vec{v}_{air}$ des Luftfahrzeugs mit Bezug auf die Luft zu bestimmen, ausgedrückt im geografischen Bezugssystem {Nord, Ost, Mitte}, beispielsweise mit der folgenden Berechnung: $\Psi = \arctan\left(\dfrac{v_{air_e}}{v_{air_n}}\right)$ wobei $v_{air_e}, v_{air_n}$ die jeweiligen Projektionen der normierten Luftgeschwindigkeit auf der Ost- und der Nordachse des lokalen Bezugssystems {Nord, Ost, Mitte} sind.

9. Verfahren nach Anspruch 7 oder 8, **dadurch gekennzeichnet, dass** es ferner darin besteht, die Integrität der von einem oder mehreren Windmesssystemen des Luftfahrzeugs gelieferten Geschwindigkeitsinformationen durch Vergleichen mit der Geschwindigkeit $\vec{v}_{air}$ des Luftfahrzeugs mit Bezug auf die Luft zu kontrollieren.

10. Verfahren nach einem der Ansprüche 1 bis 8, **dadurch gekennzeichnet, dass** es ferner darin besteht, die Integrität der von einem oder mehreren Windmesssystemen des Luftfahrzeugs gelieferten windmesstechnischen Geschwindigkeitsinformationen durch Vergleichen der Variation der windmesstechnischen Geschwindigkeit mit der Variation der geografischen Geschwindigkeit $\vec{v}$ zu kontrollieren.

11. Verfahren nach einem der vorherigen Ansprüche, **dadurch gekennzeichnet, dass** es darin besteht, zuvor die Integrität der empfangenen Funknavigationssignale durch Anwenden eines autonomen Kontrollverfahrens der Integrität der Messwerte zu prüfen.

12. System zum Bestimmen von Navigationsparametern eines Luftfahrzeugs, das in dem Luftfahrzeug installiert ist, das wenigstens einen Monoantennen-Funknavigationsempfänger und Rechenmittel umfasst, ausgelegt zum Ausführen des Verfahrens nach einem der Ansprüche 1 bis 11.

## Claims

1. Method for determining navigation parameters of an aircraft (100), the method comprising at least the determination of the geographic speed $\vec{V}$ (110) of the aircraft (100), expressed in a given local fixed reference system $\{\vec{i}, \vec{j}, \vec{k}\}$, the method comprising the steps of:

   - determining measurements $m_i$ of carrier phase increments $\Delta\varphi_i$ of the radio-navigation signals originating from a plurality of radio-navigation satellites with a view of the aircraft (100) and received by a radio-navigation receiver at a single antenna, each of the measurements $m_i$ constituting an estimate (111) of the relative speed of the aircraft (100) relative to the satellite (121) projected onto the viewing axis (101) which connects the aircraft (100) to the satellite (121), the measurements $m_i$ being determined by the reading between two times of the development of the phase of the carrier phase loop of the radio-navigation receiver,
   - compensating for each of the measurements $m_i$ of the apparent radial speed of the satellite (121),
   - determining the components $\omega = [\omega_X, \omega_Y$ and $\omega_Z]$ of the geographic speed of the aircraft by solving the system of equations $m = H\omega + b$, where m is the vector of the measurements $m_i$, H is the change matrix of the reference system of the viewing axes towards the local reference system $\{\vec{i}, \vec{j}, \vec{k}\}$ and b is the assumed centred Gaussian thermal noise which affects the measurements $m_i$.

2. Method according to claim 1, **characterised in that** the geographic speed $\vec{v}$ is obtained by applying the method of least squares to the solution of the matrix equation $m = H\vec{v} + b$, where m is a vector whose components are the measurements $m_i$ of carrier phase increments of each of the radio-navigation signals received, b is a vector whose components are the measurement errors, for example, which result from the thermal noise and which affect the measurements $m_i$, H is the change matrix of the reference system of the axes (101, 102, 103) with a satellite view towards the local reference system $\{\vec{i}, \vec{j}, \vec{k}\}$.

3. Method according to any one of the preceding claims, **characterised in that** it further involves determining the acceleration $\vec{\gamma}$ of the aircraft (100) in the local reference system $\{\vec{i}, \vec{j}, \vec{k}\}$, from a measurement $\vec{\gamma_i}$ of the derivative over a given period of time, the phase increments $\Delta\varphi_i$, each of the derivative measurements $\vec{\gamma_i}$ constituting an estimate of the relative acceleration of the aircraft (100) relative to the satellite (121, 122, 123) projected onto the viewing axis (101, 102, 103) between the aircraft and the satellite to which the apparent acceleration $\vec{y}_i^a$ of the satellite in the direction of the viewing axis is added in order to obtain the total acceleration $\vec{y}_i^p$ of the aircraft (100) in the satellite viewing axis (101, 102, 103).

4. Method according to claim 3, **characterised in that** the acceleration $\vec{\gamma}$ of the aircraft in the local reference system is obtained by applying the method of least squares to the solution of the matrix equation $\vec{\gamma^p} = H\vec{\gamma} + b'$, where $\vec{\gamma^p}$ is a vector whose components are the measurements $\vec{\gamma^p}$ of total acceleration of the aircraft in each axis with a satellite view, b' is a vector whose components are the measurement errors which affect the integration measurements $\vec{\gamma_i}$, H is the change matrix of the reference system of the axes (101, 102, 103) with a satellite view towards the local reference system $\{\vec{i},\vec{j},\vec{k}\}$

5. Method according to either claim 3 or claim 4, **characterised in that** it further involves determining the roll angle $\Phi$ of the aircraft from the geographic speed $\vec{v}$ of the aircraft expressed in the geographic reference system {north, east, centre} and the specific force $\vec{f}$ applied to the aircraft, the force $\vec{f}$ being deducted from the acceleration $\vec{\gamma}$ by subtracting from it the gravitational field of the Earth, the roll angle $\Phi$ being calculated using the following relationship:

$$\Phi = a\tan\left(\frac{v_n \cdot f_{H_e}(\vec{v}) - v_e \cdot f_{H_n}(\vec{v})}{-f_{H_c}(\vec{v})}\right)$$

where $v_n$ and $v_e$ are the standardised components of the direction of the geographic speed $\vec{v}$ on the east and north axes of the local reference system {north, east, centre} and $\vec{f}_H(\vec{v}) = \vec{f} - (\vec{f}.\vec{v})\vec{v}$ is the projection of the specific force $\vec{f}$ onto the plane orthogonal to the movement of the aircraft.

6. Method according to any one of the preceding claims, **characterised in that** it further involves determining the pitch angle $\theta$ from the geographic speed $\vec{v}$ of the aircraft expressed in the geographic reference system {north, east, centre}, for example, using the following calculation: $\theta = \arcsin(-v_c)$, where $v_c$ is the projection of the standardised geographic speed $\vec{v}$ onto the centre axis of the reference system.

7. Method according to any one of the preceding claims, **characterised in that** it further involves determining the speed $\vec{v}_{air}$ of the aircraft (100) relative to the air by subtracting an estimate of the speed of the wind $\vec{v}_{vent}$ from the geographic speed $\vec{v}$ (110) of the aircraft (100).

8. Method according to claim 7, **characterised in that** it further involves determining the heading angle $\psi$ from the speed $\vec{v}_{air}$ of the aircraft relative to the air expressed in the geographic reference system {north, east, centre}, for example, using the following calculation: $\Psi = \arctan\left(\frac{v_{air_e}}{v_{air_n}}\right)$ with $v_{air_e}, v_{air_n}$, the respective projections of the standardised air speed onto the east and north axes of the local reference system {north, east, centre}.

9. Method according to either claim 7 or 8, **characterised in that** it further involves performing a verification of the integrity of the speed information provided by one or more anemometric systems which the aircraft comprises by comparison with the speed $\vec{v}_{air}$ of the aircraft relative to the air.

10. Method according to any one of claims 1 to 8, **characterised in that** it further involves performing a verification of the integrity of the anemometric speed information provided by one or more anemometric systems which the aircraft comprises by comparing the variation of the anemometric speed with the variation of the geographic speed $\vec{v}$.

11. Method according to any one of the preceding claims, **characterised in that** it involves verifying beforehand the integrity of the radio-navigation signals received by applying a method for autonomous verification of the integrity of the measurements.

12. System for determining navigation parameters of an aircraft, which is on-board the aircraft, comprising at least one mono-antenna radio-navigation receiver and calculation means which are capable of implementing the method according to any one of claims 1 to 11.

**FIG.1**

**EP 2 490 042 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0116561

- EP 1837675 A